# FASCICULE DE BREVET EUROPEEN

(11) **EP 1 079 759 B1**
(45) Date de publication et mention de la délivrance du brevet: **10.04.2002**
(21) Numéro de dépôt: 99920893.7
(22) Date de dépôt: 20.05.1999
(51) Int. Cl.: A61C 11/00

(54) **ARTICULATEUR PERMETTANT L'ELABORATION DE PROTHESES DENTAIRES**
ARTIKULATOR ZUR HERSTELLUNG VON ZAHNÄRZTLICHEN PROTHESEN
ARTICULATOR FOR PRODUCING DENTAL PROSTHESES

(30) Priorité: 25.05.1998 FR 9806521
(43) Date de publication de la demande: 07.03.2001
(73) Titulaire: Rocher, Pascal, 21000 Dijon (FR)
(72) Inventeur: Rocher, Pascal, 21000 Dijon (FR)
(74) Mandataire: Vuillermoz, Bruno
(86) Numéro de dépôt international: FR9901197
(87) Numéro de publication internationale: WO9960947

(56) Documents cités:
- DE-A- 3 813 956
- DE-A- 4 211 017
- DE-A- 19 621 800

## Description

La présente invention concerne un articulateur permettant le paramétrage du plan d'orientation prothétique ou occlusal et des étages dento-alvéolaires en vue de l'élaboration de prothèses dentaires.

Pour l'élaboration de prothèses dentaires, on utilise actuellement des articulateurs de type "ARCON", le plus souvent utilisé, ou encore "NONARCON". Ces appareils, utilisés dans les laboratoires de prothèses dentaires et dans les cabinets dentaires, servent à reproduire l'enveloppe des mouvements physiologiques naturels entre les arcades dentaires d'un patient par rapport à son crâne, dans le but de fabriquer au laboratoire des bridges, prothèses, etc.

Ces appareils comportent généralement deux éléments ou membres plans, respectivement inférieur et supérieur, qui sont articulés entre eux autour d'un axe horizontal parallèle au plan des deux éléments et situé à un niveau supérieur à celui de l'élément plan inférieur. Sur ces éléments plans supérieur et inférieur qui reproduisent en quelque sorte les mâchoires d'un patient, sont fixés des modèles en plâtre des arcades dentaires du patient. Ces modèles comprennent un modèle supérieur, reproduisant l'arcade dentaire supérieure, fixé sous la face inférieure de l'élément supérieur, et un modèle inférieur, reproduisant l'arcade dentaire inférieure, fixé sur la face supérieure de l'élément inférieur. Lorsque le nombre de dents en antagonisme le permet, il existe un calage naturel entre l'étage moyen de la face et l'étage inférieur de la face. Ceci préserve la dimension verticale d'occlusion qui concourt à l'esthétique du visage. Cette dimension verticale est donc transférée sur l'articulateur, lorsque les modèles en plâtre des arcades dentaires du patient sont montés grâce à l'arc facial et en occlusion. Sur l'articulateur, les deux modèles du patient sont fixés en regard l'un de l'autre de manière à venir en contact l'un avec l'autre suivant un plan d'occlusion, qui correspond au plan d'occlusion des arcades dentaires du patient. La céphalométrie est l'étude des structures craniofaciales sur radiographie de la tête, de profil ou de face. On peut tracer sur une téléradiographie de profil, le plan horizontal de Francfort, lequel passe par le sommet de l'image des conduits auditifs externes droit et gauche et les images des trous infra-orbitaires, ainsi que le plan d'occlusion du patient défini comme le plan occlusal tracé par le repérage de la zone d'engrènement des premières molaires et des incisives centrales. Chez un sujet denté normodivergent, le plan d'occlusion est le plan de contact entre les dents du haut et les dents du bas, et il est généralement incliné de haut en bas et d'arrière en avant, d'un angle de 10° par rapport au plan horizontal de Francfort.

Il existe sur le marché des accessoires permettant de paramétrer le plan d'occlusion mais ces accessoires ne permettent pas de faire le paramétrage aussi facilement entre les deux modèles des arcades dentaires montés; pas plus qu'ils ne permettent la fabrication en laboratoire des maquettes d'occlusion, ou de bridges provisoires, conformes au paramétrage défini par l'étude du praticien. Ces accessoires n'ont pas non plus la possibilité de permettre de tracer le plan d'orientation prothétique sur les modèles en plâtre des arcades dentaires du patient.

Dans les articulateurs connus actuellement, le modèle en plâtre supérieur monté sur un plateau fixé sur l'élément inférieur de l'articulateur. à une hauteur prédéterminée au-dessus de cet élément et incliné d'un angle de 10° de haut en bas et d'arrière en avant par rapport à l'élément supérieur, n'est valable que pour un patient normodivergent, dont l'arcade supérieure occupe spatialement la position par rapport au crâne que lui impose ce plateau standard, Or, une telle hauteur fixe et une telle inclinaison fixe ne correspondent pas à la généralité des cas rencontrés en pratique chez les divers patients traités, qui présentent un schéma craniofacial pouvant aller de l'hypo à l'hyperdivergence. Monter alors le modèle maxillaire de l'arcade dentaire du patient selon ce plan standard revient à négliger la position spatiale de l'arcade maxillaire par rapport à la base du crâne. En d'autres termes, on utilise un plan standard d'un normodivergent type pour tout le monde. Un tel plateau fixe en hauteur et en inclinaison conduit donc à une impossibilité d'un montage correct des prothèses dentaires.

Le document DE-A-4 211 017 décrit un articulateur qui comprend les caractéristiques définies dans le préambule de la revendication 1.

La présente invention vise à remédier à ces inconvénients en procurant un articulateur permettant de définir un plan d'orientation prothétique paramétrable à volonté, aussi bien en millimètre de hauteur qu'en degré d'inclinaison, en tenant compte de la morphologie du patient (hyper, hypo ou normodivergent).

A cet effet, cet articulateur permettant le paramétrage du plan d'orientation prothétique ou occlusal et des étages dento-alvéolaires en vue de l'élaboration de prothèses dentaires, comprend :
- deux éléments plans supérieur et inférieur articulés entre eux autour d'un axe horizontal parallèle aux plans des éléments et situé au-dessus de l'élément plan inférieur, les deux éléments plans étant destinés a la fixation, en regard l'un de l'autre et en contact l'un avec l'autre de deux modèles des arcades dentaires d'un patient, à savoir un modèle supérieur fixé sous la face inférieure de l'élément supérieur et un modèle inférieur fixé sur la face supérieure de l'élément inférieur,
- des moyens pour définir entre les deux éléments, un plan incliné par rapport à l'élément supérieur et correspondant à un plan d'occlusion entre les deux modèles, lesdits moyens étant portés par l'élément supérieur et comportant un plateau matérialisant le plan d'orientation occlusal.

Selon l'invention, les moyens définissant le plan incliné comportent des moyens de réglage de l'angle d'inclinaison et de la distance du plateau par rapport à l'élément supérieur, et le réglage de la distance du plateau par rapport à l'élément supérieur est assuré par au moins un ensemble porté par l'élément supérieur et une colonne graduée portant le plateau à son extrémité inférieure et coulissant perpendiculairement à l'élément supérieur dans l'ensemble, assurant le guidage de la colonne et son blocage dans une position réglable par rapport à l'élément supérieur.

L'articulateur conforme à l'invention permet la fabrication de maquettes d'occlusion selon un plan d'orientation prothétique adapté à chaque patient, ceci grâce à un double mouvement autour d'un axe ne perturbant pas la programmation angulaire choisie pour le plan d'orientation prothétique. L'articulateur peut comporter additionnellement un compas permettant le tracé du plan d'orientation prothétique et de l'orientation de la ligne des collets gingivo-dentaires. Il permet aussi l'utilisation d'un axe sagittal antéro-postérieur permettant de diagnostiquer le voilage d'un plan d'occlusion, c'est à dire son asymétrie par rapport à la base du crâne.

L'articulateur conforme à l'invention permet d'obtenir un gain de temps et une fiabilité constante à tous les stades du travail de reconstruction prothétique. Dans son application en orthodontie, grâce à l'enregistrement avant traitement du plan d'occlusion (coordonnées en millimètres de hauteur et degrés d'inclinaison), l'orthodontiste peut, en cours de traitement ou après traitement, vérifier l'action de l'appareillage orthodontique en bouche, en transférant à nouveau la situation spatiale des arcades dentaires du patient sur l'articulateur et en effectuant une comparaison avec des valeurs initiales (en particulier, les compensations dento-alvéolaires).

L'articulateur conforme à l'invention permet également de diagnostiquer et de quantifier les asymétries du plan d'occlusion, responsables entre autres, de traumatismes dentaires ayant des répercutions sur les arcades dentaires et les articulations temporo-mandibulaires. Il permet aussi d'établir un plan de traitement chirurgical et prothétique avant traitement. Un paramétrage rigoureux permet de systématiser les modifications chirurgicales, orthodontiques ou prothétiques envisagées par un médecin traitant sur son patient.

L'appareil est d'un usage simple et rapide, appréciable par les praticiens, quelle que soit leur orientation (chirurgie implantaire ou parodontale, prothétique, orthodontique) et par les prothésistes. La communication, en ce qui concerne le transfert des modèles des patients, entre un cabinet dentaire et un laboratoire de prothèses, s'en trouve grandement améliorée.

Il est décrit ci-après, à titre d'exemple non limitatif, des formes d'exécution de la présente invention en référence aux dessins annexés sur lesquels :
- la figure 1 est une vue en perspective d'un articulateur selon l'invention dans lequel les moyens définissant la position du plan incliné correspondant au pian d'occlusion sont montés à l'avant de l'élément supérieur.
- la figure 2 est une vue en élévation latérale schématique de l'articulateur de la figure 1, prise de la gauche sur cette figure.
- la figure 3 est une vue en élévation schématique de l'articulateur dans lequel les moyens définissant le plan incliné correspondant au plan d'occlusion sont montés à l'arrière de l'élément supérieur.
- la figure 4 est une vuc en coupe verticale du crâne d'un patient édenté dont le plan d'occlusion est incorrect.
- les figures 5, 6 et 7 sont des vues schématiques en élévation latérale illustrant l'utilisation de l'articulateur selon l'invention pour la correction des modèles supérieur et inférieur du patient représenté sur la figure 4 et l'obtention d'un plan d'occlusion correct.
- la figure 8 est une vue en coupe verticale du crâne du patient ayant retrouvé un plan d'occlusion correct.
- la figure 9 est une vue en élévation latérale de la colonne graduée et d'un ensemble supportant le plateau matérialisant le plan d'orientation prothétique ou occlusal.
- la figure 10 est une vue en élévation de l'ensemble représenté sur la figure 9, prise de la droite sur cette figure.
- la figure 11 est une vue en coupe horizontale selon la ligne XI-XL de la figure 9.
- la figure 12 est une vue en élévation latérale de la colonne graduée.
- la figure 13 est une vue en coupe horizontale selon la ligne XIII-XIII de la figure 12.
- la figure 14 est une vue en élévation latérale de la butée réglable angulairement.
- la figure 15 est une vue en plan de la butée réglable angulairement.
- la figure 16 est une vue en élévation latérale de la pièce intermédiaire de liaison.
- la figure 17 est une vue en plan de la pièce intermédiaire de liaison.
- la figure 18 est une vue en élévation, avec arrachement partiel, de l'axe d'articulation et de sa vis le blocage.
- la figure 19 est une vue de profil de l'axe d'articulation prise de la gauche sur la figure 18.
- les figures 20 et 21 sont des vues en coupe verticale de l'ensemble supportant la plateau, respectivement dans une position selon laquelle le plateau est aligné avec la butée réglable angulairement et dans une position selon laquelle le plateau est incliné vers le bas par rapport à la position d'alignement avec cette butée réglable.
- la figure 22 est une vue en plan d'un ensemble constitué d'une glissière, d'un compas pointe graphite montable à gauche ou à droite permettant des tracés sur les arcades dentaires, et de réglettes amovibles pouvant être utilisées à la place du plateau matérialisant le plan d'orientation prothétique ou occlusal.
- la figure 23 est une vue en élévation de l'ensemble à glissière et réglettes représenté sur la figure 22.
- la figure 24 est une vue de profil de l'ensemble représente sur la figure 22, prise de la gauche sur cette figure.
- la figure 25 est une vue de profil de l'ensemble représenté sur la figure 22 prise de la droite sur cette figure.
- la figure 26 est une vue schématique en éclaté d'un autre mode de réalisation de l'articulateur conforme à l'invention, dont la figure 27 est une vue de détail de la coulisse verticale, la figure 28 une vue schématique de l'index de lecture des graduations, et la figure 29 une vue des graduations apposées sur une plaque venant se fixer sur ladite coulisse ;
- la figure 30 est une vue schématique partiellement éclatée de la forme de réalisation représentée en figure 26 ;
- la figure 31 est une représentation schématique en perspective de la forme de réalisation représentée au niveau des figures 26 et 30, et montée sur l'articulateur complet.

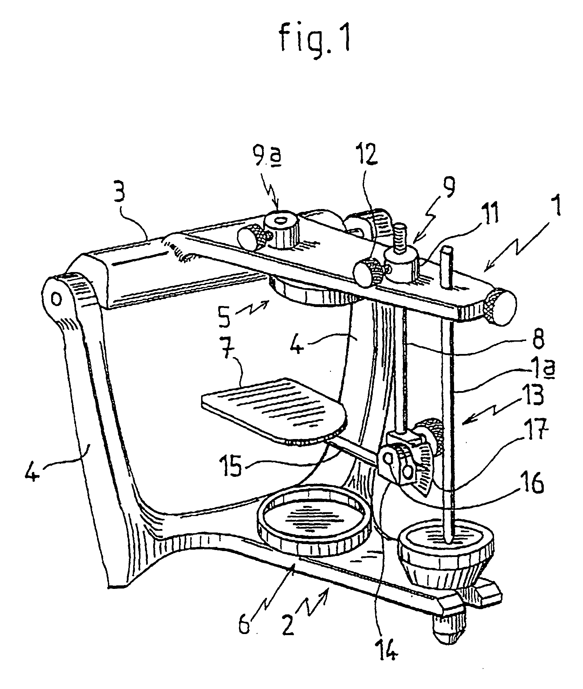

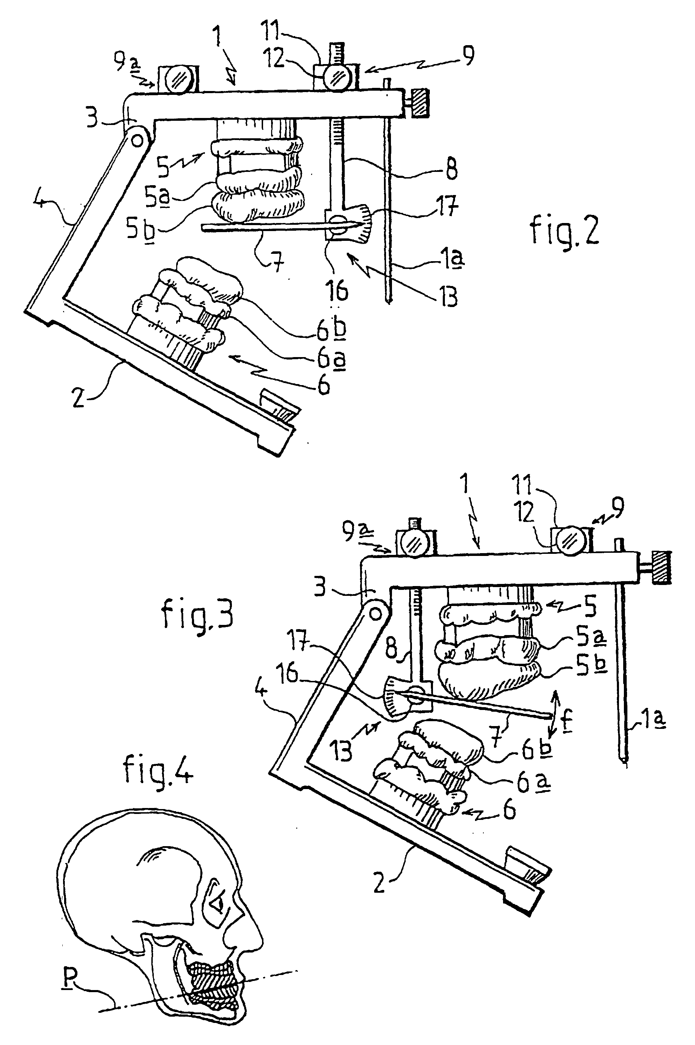

L'articulateur selon l'invention, qui est représenté schématiquement sur les figures 1 et 2, est du type des articulateurs connus dans le commerce nous la dénomination "ARCON". Cet articulateur pour l'élaboration de prothèses dentaires, comprend essentiellement un élément ou membre plan supérieur (1) et un élément ou membre plan inférieur (2), lesquels sont articulés entre eux autour d'un axe horizontal et transversal, parallèle aux plans des deux éléments et situé au-dessus de l'élément inférieur (2). L'axe (3). correspondant à l'axe charnière bicondylien des articulateurs. est porté en fait par deux bras (4) qui s'étendent vers le haut à partir de l'élément inférieur (2) et qui forment une seule pièce avec celui-ci. L'articulateur présente une position de fermeture dans laquelle les deux éléments (1, 2) sont sensiblement parallèles l'un à l'autre. Cette position est déterminée par une tige incisive (1a) traversant perpendiculairement l'élément supérieur (1), bloquée en position réglable, et dont l'extrémité inférieure est au contact avec une pièce d'appui montée sur la face supérieure de l'élément inférieur (2), appelé le plateau ou table incisif. Elle permet de préserver la relation entre les deux arcades dentaires telle qu'elle existe dans la bouche du patient ; ceci définit une dimension verticale d'occlusion. Cette dimension verticale d'occlusion permet l'harmonie esthétique de l'étage inférieur de la face.

Les deux éléments supérieur (1) et inférieur (2) matérialisent respectivement les mâchoires supérieure et inférieure d'un patient, pour lequel une prothèse dentaire doit être fabriquée. A cet effet, on réalise de manière habituelle, deux modèles des arcades dentaires du patient, à savoir un modèle supérieur (5), correspondant à l'arcade dentaire supérieure, fixé sous la face inférieure de l'élément supérieur (1), et un modèle inférieur (6), correspondant à l'arcade dentaire inférieure, fixé sur la face supérieure de l'élément inférieur (2). Les modèles supérieur (5) et inférieur (6), réalisés généralement en plâtre, comportent habituellement une maquette d'occlusion ou plaque de base respective (Sa) et (6a) en résine dure et surmontée d'un bourrelet superficiel respectifs (5b), (6b) en matière thermoformable ("stents").

Les prothèses dentaires qui doivent être fabriquées en utilisant l'articulateur selon l'invention, doivent être établies à partir de modèles supérieur (5) et inférieur (6) qui, lorsque l'articulateur est fermé (position représentés sur les figures 1 et 7) sont en contact suivant un plan d'occlusion P, qui est incliné d'arrière en avant et de haut en bas, d'un angle α, dont la valeur est égaie ou voisine de 10° chez un normodivergent. L'articulateur selon l'invention est pourvu à cet effet de moyens qui permettent de prédéterminer la position de ce plan d'orientation occlusal ou prothétique en millimètres de hauteur et en degrés d'inclinaison par rapport à une référence constituée par le plan de Francfort précité.

Selon l'invention, les moyens définissant le plan d'inclinaison correspondant au plan d'orientation occlusal P désiré sont portés par l'élément supérieur (1) de l'articulateur et comportent un plateau mince (7), destiné à matérialiser le plan d'orientation prothétique ou occlusal, et des moyens de réglage de l'angle d'inclinaison et de la distance du plateau (7) par rapport à l'élément supérieur (1). Ces moyens de réglage comportent une colonne graduée (8), coulissant perpendiculairement par rapport au plan de l'élément supérieur (1), dans au moins un ensemble de guidage et de blocage (9). Dans la forme d'exécution non limitative représentée sur les figures, l'articulateur comprend en fait deux ensembles de guidage et de blocage, à savoir un ensemble antérieur (9) et un ensemble postérieur (9a), l'ensemble postérieur (9a) étant monté, sur l'élément supérieur (1), dans une position plus proche de l'axe d'articulation horizontal (3) que l'ensemble antérieur (9). Chaque ensemble de guidage et de blocage (9, 9a) peut comporter un manchon (11) traversé de part en part par la colonne graduée (8) et disposé coaxialement par rapport à un orifice traversant ménagé en dessous dans l'élément supérieur (1). Le blocage de la colonne (8) dans n'importe quelle position désirée en hauteur est assuré par une vis (12) vissée dans un trou radial fileté du manchon (11), et dont l'extrémité prend appui à l'intérieur du manchon (9), sur la colonne graduée (8). La colonne graduée (8) est guidée dans le manchon (9), sans pouvoir tourner autour de son axe et à cet effet, elle peut présenter une section transversale non circulaire, par exemple carrée.

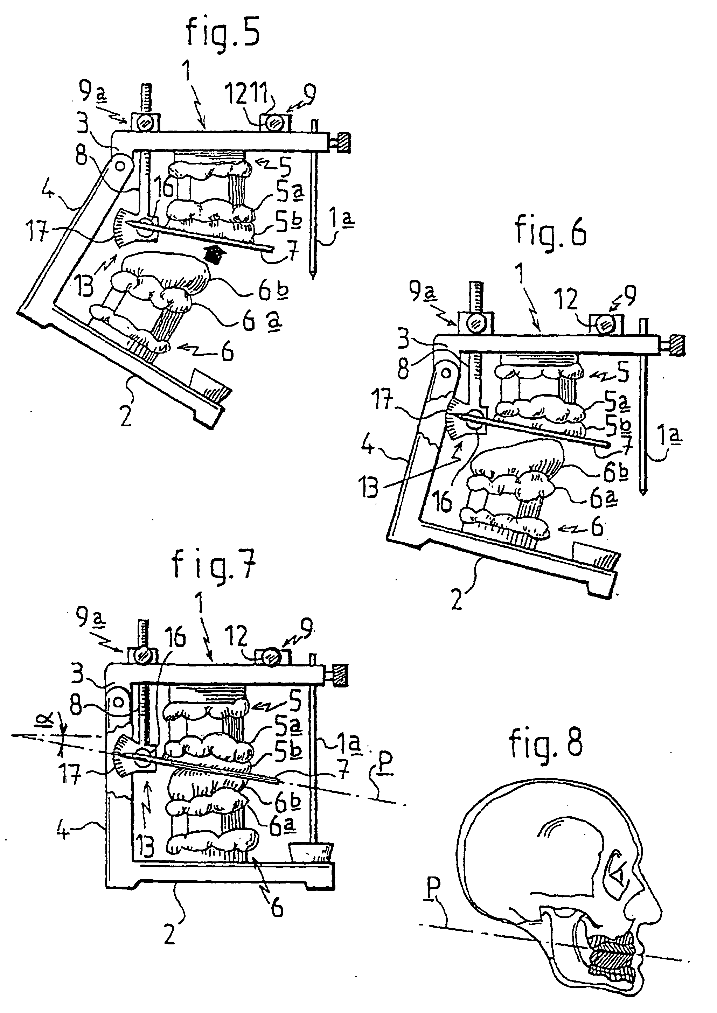

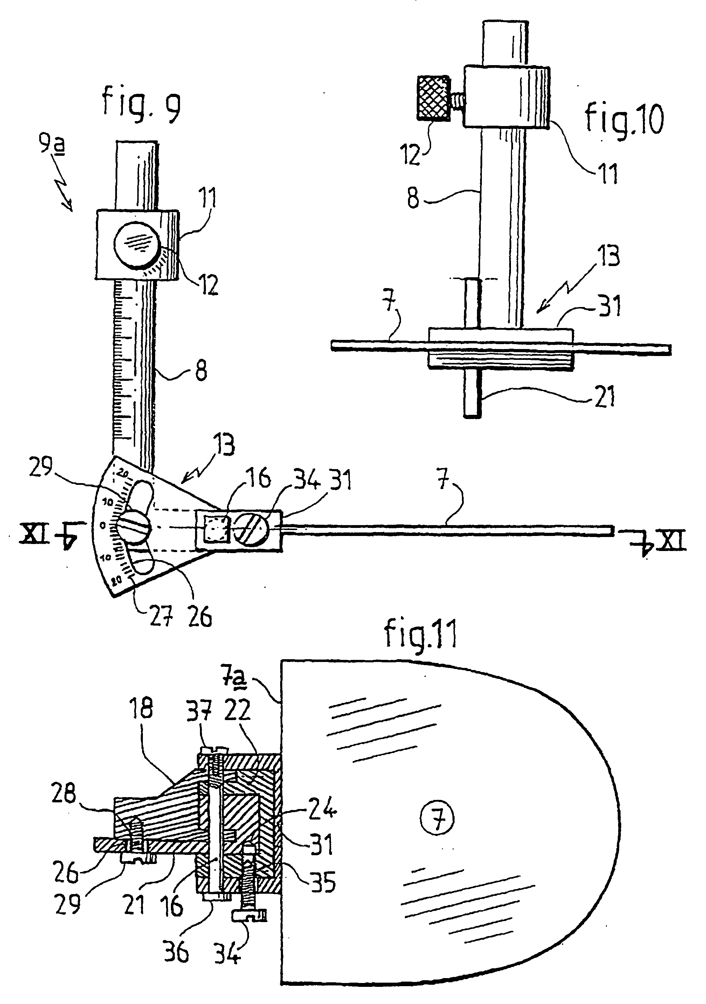

La colonne graduée (8) porte à son extrémité inférieure, un ensemble (13) supportant le plateau (7) et permettant de faire varier son degré d'inclinaison α. Une forme d'exécution non limitative de cet ensemble (13) sera décrite plus loin en référence aux figures 9 à 21. L'ensemble (13) comporte dans l'exemple de la figure 1, un support tubulaire (14) dans lequel est engagée une tige (15) solidaire du plateau (7). Le support tubulaire (14) est articulé sur la partie extrême inférieure de la colonne graduée (8), autour d'un axe horizontal (16), qui est parallèle à l'axe d'articulation (3) entre les deux éléments (1) et (2). Le degré d'inclinaison α du support tubulaire (14) et par conséquent du plateau (7) autour de l'axe de pivotement (16) par rapport au plan de l'élément supérieur (1), est indiqué au moyen d'un vernier (17) solidaire de la partie extrême inférieure de la colonne graduée (8).

On décrira maintenant, à titre d'exemple d'application de l'articulateur selon l'invention, sa mise en oeuvre pour corriger un plan d'occlusion P incorrect, tel que représenté sur la figure 4 et pour obtenir un plan d'occlusion P correct, tel que représenté sur le figure 8. Au départ, le plan d'occlusion P incorrect qui résulte d'une édentation totale d'un patient (figure 4), est incliné de bas en haut et d'arrière en avant, c'est-à-dire à l'inverse de l'inclinaison correcte. Pour corriger ce défaut, l'appareil est utilisé pour des raisons de commodité pour le prothésiste, avec les moyens de réglage situés en position arrière, c'est-à-dire avec la colonne graduée (8) engagée dans l'ensemble de guidage et de blocage postérieur (9a), comme il apparaît sur la figure 3. Les modèles supérieur (5) et inférieur (6) fixés respectivement aux éléments (1) et (2) ainsi qu'il est représenté sur la figure 3, correspondent à ceux pris sur le patient et ils reproduisent l'inclinaison incorrecte du plan d'occlusion P. Le prothésiste peut ensuite paramétrer l'usage de l'appareil, c'est-à-dire déterminer à l'avance la hauteur du plateau (7) et son inclinaison en vue de la future reconstruction. Le prothésiste bloque donc la colonne graduée (8) à la hauteur désirée dans l'ensemble (9a), et après avoir ramolli par chauffage, le bourrelet en matière thermoformable (5b) du modèle supérieur (5) et avoir ouvert l'articulateur, il tapote avec le plateau (7) sur le bourrelet ramolli (5b) en faisant osciller ce plateau (7) autour de l'axe de pivotement (16), comme il est indiqué par la flèche f sur la figure 3, jusqu'à ce que le bourrelet ramolli (5b) soit amené à présenter une face inférieure plane située à la hauteur voulue et inclinée de l'angle α souhaitée pour le plan d'occlusion P. La situation finale résultant du tapotement du bourrelet (5b) par le plateau (7) est représentée sur la figure 5. Pendant cette opération de modelage du bourrelet (5b) du modèle supérieur (5), le modèle inférieur (6) est maintenu en place sur l'élément inférieur (2), toujours écarté de l'élément supérieur (1). Après refroidissement et durcissement du bourrelet supérieur (5b) à surface inférieure plane, on enlève le plateau (7) de son support (14) (figure 6), on chauffe le bourrelet thermoformable (6b) du modèle inférieur (6) de manière à le ramollir, et on ferme l'articulateur à la dimension verticale enregistrée en bouche et qui est définie par la hauteur de la tige incisive (1a). Par suite de la pression exercée, le bourrelet inférieur ramolli (6b) se déforme au contact du bourrelet supérieur durci (5b) et le bourrelet inférieur (6b) adopte alors une face supérieure plane qui est adjacente à la face intérieure du bourrelet supérieur (5b). Ces deux faces sont alors contenues dans le plan d'occlusion P qui est situé à la hauteur voulue et est incliné de l'angle α désiré pour ce plan. La figure 8 représente les deux modèles supérieur et intérieur, à plan d'occlusion P correct, placés en bouche.

Dans la généralité des applications de l'articulateur, le plateau (7) destiné à définir la position du plan d'occlusion P, n'a qu'un seul degré de liberté, c'est-à-dire qu'il peut simplement pivoter autour de l'axe d'articulation horizontal (16). Toutefois, on peut également envisager d'accorder au plateau (7) un degré de liberté supplémentaire en lui permettant de pivoter transversalement vers la gauche et vers le droite, autour de l'axe de sa tige support (15).

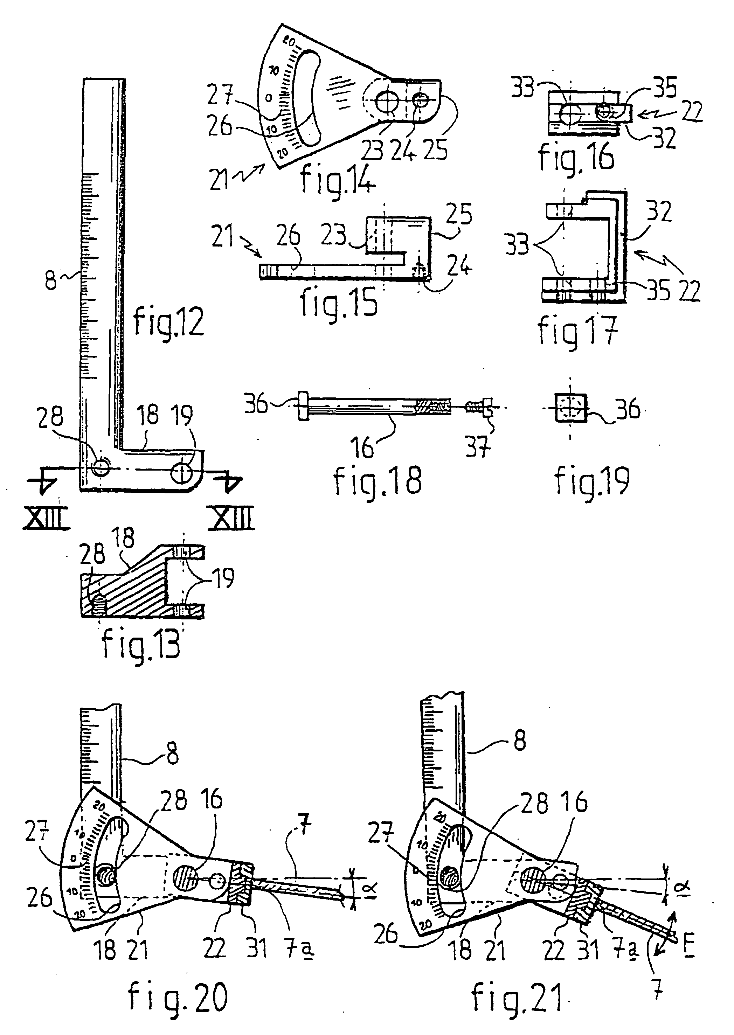

On décrira maintenant, en se référant aux figures 9 à 21, une forme d'exécution non limitative de l'ensemble (13), telle que montée en variante sur les figures 3, et 5 à 7, supportant le plateau (7) et permettant de faire varier son degré d'inclinaison α par rapport a l'horizontale au à l'élément supérieur (1) de l'articulateur. Cet ensemble (13) comporte tout d'abord une chape (18) qui est formée à l'extrémité inférieure de la colonne graduée (8) et qui s'étend vers la droite, comme on peut mieux le voir sur les figures 12 et 13. De ce fait, la colonne graduée (8), vue en élévation, présente une forme en L. Les deux branches parallèles de la chape (18) sont percées respectivement de trous coaxiaux (19), destinés à recevoir et supporter l'axe de pivotement (16) de l'ensemble (13).

L'ensemble (13) comporte par ailleurs deux pièces emboîtées l'une dans l'autre et articulées conjointement autour de l'axe de pivotement (16), à savoir une butée réglable angulairement (21), représentée d'une façon détaillée sur les figures 14 et 15, et une pièce intermédiaire de liaison (22), représentée d'une façon détaillée sur les figures 16 et 17.

La butée réglable (21) qui est appliquée contre une face latérale verticale de la partie inférieure de la colonne (8) ou de la chape intérieure (18) de la colonne (8), comporte dans sa partie droite, un orifice traversant (23) de même diamètre que celui de l'axe de pivotement (16), et destiné à recevoir cet axe, et, dans sa face externe, un trou borgne (24) disposé entre l'orifice (23) et le côté vertical droit (25) de la butée réglable (21). Dans sa partie gauche, la butée (21) présente une fente oblongue (26) en forme d'arc de cercle centré sur le centre de l'orifice (23) et dont un bord porte une graduation (27). Cette fente courbe (26) s'étend en regard d'un trou borgne fileté (28), réalisé au sein de la face latérale verticale de la colonne (8) ou de la chape (18) contre laquelle est plaquée la butée réglable (21). Lorsque cette butée réglable se trouve en position horizontale ou position « zéro », le trou fileté (28) est aligné horizontalement avec les orifices (19) prévus pour la réception de l'axe (16). Une vis de blocage (29) est vissée dans le trou borgne (28) en passant à travers la fente arquée (26), et destinée à assurer le blocage de la butée réglable (21) dans n'importe qu'elle position angulaire désirée par rapport à l'horizontale, après l'avoir fait pivoter autour de l'axe (16).

Il va de soi que la partie graduée supérieure de la butée (21), située à droite dans les figures 9, 14, 20 et 21, et qui est symétrique de la partie graduée inférieure par rapport à l'horizontale, est utilisée de la même façon lorsque la colonne (8) soutenant l'ensemble (13) est montée à l'avant de l'articulateur, c'est à dire dans l'ensemble de guidage et de blocage (9), comme représenté dans les figures 1 et 2.

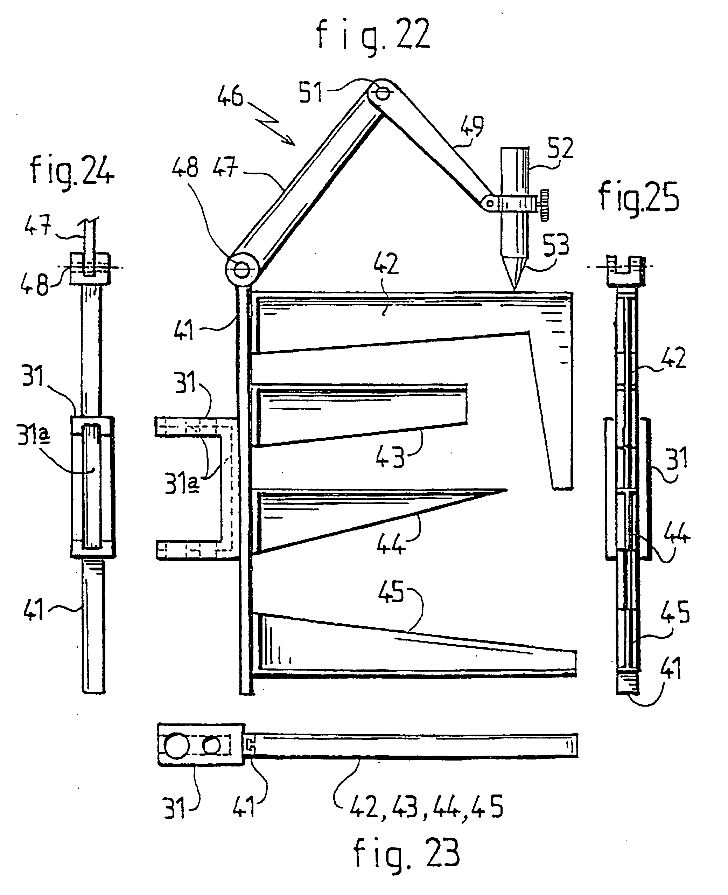

La pièce intermédiaire de liaison (22) est, elle aussi, montée pivotante autour de l'axe d'articulation (16). Elle est accouplée au plateau (7) par l'intermédiaire d'une chape (31), c'est-à-dire en forme de U, qui est fixée par son âme transversale, au côté transversal arrière ou gauche (7a)- de ce plateau (7), et dont les ailes parallèles s'étendent vers l'arrière, c'est-à-dire vers l'axe de pivotement (16). Cette chape (31), qui est mieux représentée sur les figures 22 et 24, présente sur les faces internes de son âme et de ses ailes, une rainure continue (31a) dans laquelle s'engage une nervure (32) de forme complémentaire, formée à l'extérieur de la pièce intermédiaire de liaison (22). Cette pièce intermédiaire (32) présente par ailleurs deux trous coaxiaux (33) traversés par l'axe de pivotement (16), afin de permettre à la pièce intermédiaire de liaison (22) de pivoter autour de cet axe (16). Le mouvement de pivotement de la pièce intermédiaire de liaison (22), et par conséquent du plateau (7), ne peut s'effectuer librement que vers le bas, la course de pivotement vers le haut de la pièce (22) étant limitée par sa rencontre du côté vertical droit (25) de la butée réglable (21). Autrement dit, la pièce intermédiaire (22) et la plateau (27) ne peuvent pivoter librement vers le haut que jusqu'à une position extrême supérieure, dans laquelle le plateau (7) est aligné avec la butée réglable (21), comme il est représenté sur la figure 20. La figure 21 illustre la possibilité de pivotement F vers le bas de la pièce intermédiaire (22) et du plateau (7) par rapport à la butée (21).

La pièce (22) peut être toutefois bloquée sur la butée réglable (21), lorsque le plateau (7) doit être maintenu dans la position inclinée désirée, déterminée par l'inclinaison de la butée réglable (21). Ce blocage est réalisé au moyen d'une vis (34) traversant un orifice lisse réalisé au sein d'une aile de la chape (31) et coopérant avec un trou fileté (35) (figure 17) réalisé dans la pièce intermédiaire de liaison (22), pour venir s'engager par son extrémité, dans le trou borgne (24) formé dans la butée réglable (21).

Les figures 18 et 19 représentent l'axe d'articulation (16), qui se termine à une extrémité, par une collerette rectangulaire (36) et qui présente au niveau de sa partie extrême opposée, un trou axial fileté, dans lequel est vissée une vis (37) de blocage de l'axe (16) en position.

D'après la description qui précède, on observe que la position du plan d'orientation prothétique ou occlusal peut être déterminée à l'avance par le praticien, en bloquant dans la position angulaire désirée la butée réglable (21) au moyen de la vis (29) autour de l'axe (16), cette butée déterminant alors la fin de course de pivotement vers le haut de la pièce intermédiaire de liaison (22) et du plateau (7). Ceci permet, sans déprogrammer le blocage de la butée réglable (21) sur la colonne graduée (8), de faire basculer le plateau (7) vers le bas et de le ramener vers le haut suivant la double flèche F de la figure 21, jusqu'à la position supérieure dans laquelle il est arrêté par la butée (21).

Il est maintenant décrit, en se référant aux figures 22 à 25, une variante d'exécution utilisable dans le cas où la prothèse dentaire devant être élaborée concerne un patient partiellement denté. Il peut en effet arriver qu'un patient présente, d'un côté, des étages dentaires bien situés alors que, de l'autre côté, il n'en est pas de même, par exemple par suite d'une extraction (toutes les dents du bas ayant été extraites et les dents du haut étant descendues, etc...). Il en résulte une confusion dans le niveau donné au futur plan d'occlusion. Dans un tel cas, le praticien utilise à la place du plateau continu (7) décrit précédemment, un « plateau partiel » constitué en fait d'une réglette montée sur une glissière formant support (41), elle-même solidaire au niveau de sa face amère de la chape (31) accouplée à la pièce intermédiaire de liaison (22) de l'ensemble articulé (13), et portant sur sa face avant, une ou plusieurs réglettes interchangeables (42 - 45).

Sur la figure 22 sont représentées, à titre d'exemple, quatre réglettes de formes différentes (42, 43, 44, 45), qui comportent respectivement des parties horizontales planes de faible largeur, en forme de L (42), de trapèze (43, 45) ou encore de triangle rectangle (44). Chacune des réglettes (42-45) est accouplée à la glissière (41) par un moyen d'assemblage quelconque, par exemple du type à queue d'aronde. Grâce à la réglette (42 - 45) appropriée, insérée entre les dents du haut et les dents du bas du côté sain, le praticien peut enregistrer le niveau de jonction de ces dents, c'est-à-dire le plan d'orientation occlusal, du côté sain. La réglette (42) en forme de L peut venir se placer dans la zone médiane pour voir éventuellement, dans le plan frontal, une inclinaison à gauche ou à droite et un mauvais alignement dans le sens vertical des incisives ou des canines. La réglette (43) peut être utilisée pour un secteur latéral, car elle peut être placée d'une manière bien parallèle sur le côté latéral sain. Du côté où il y a une absence de dents, l'une des réglette peut être insérée entre les deux maxillaires.

Au plateau partiel, représenté sur la figure 22 et constitué par la glissière (41) et l'une des réglettes (42 - 45), est associé un compas (46), dont l'une des branches (47) est articulée autour d'un axe (48) perpendiculaire au plan des réglettes (42-45), à l'une ou à l'autre des extrémités de la réglette (41). L'autre branche (49) du compas (46) est articulée sur la première branche (47) autour d'un axe (51). Elle porte à son extrémité libre un élément de traçage (52), comportant par exemple une pointe traçante en graphite (53), qui s'étend parallèlement au plan des réglettes (42 - 45). On peut par conséquent, en utilisant le compas (46), tracer sur les dents en place existantes qui ont baissé, le niveau qu'il convient de leur redonner en hauteur. La pointe traçante (53) se déplace toujours dans le plan de programmation, c'est-à-dire dans le plan d'orientation prothétique ou occlusal désiré.

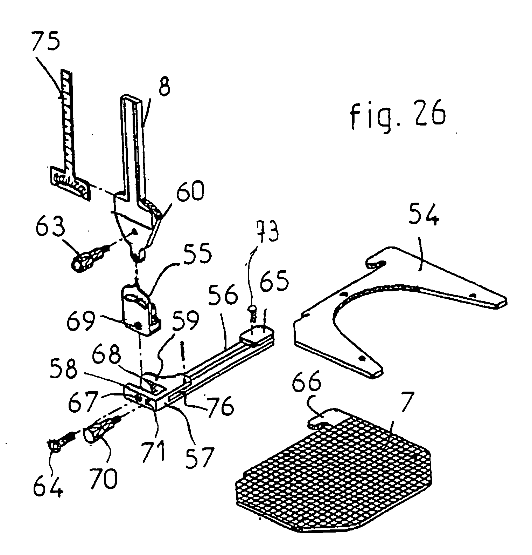

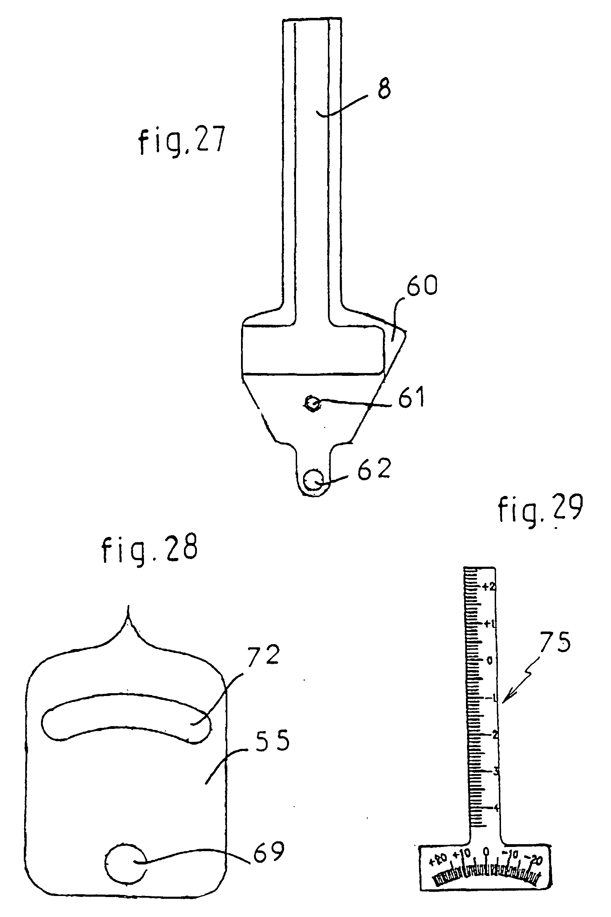

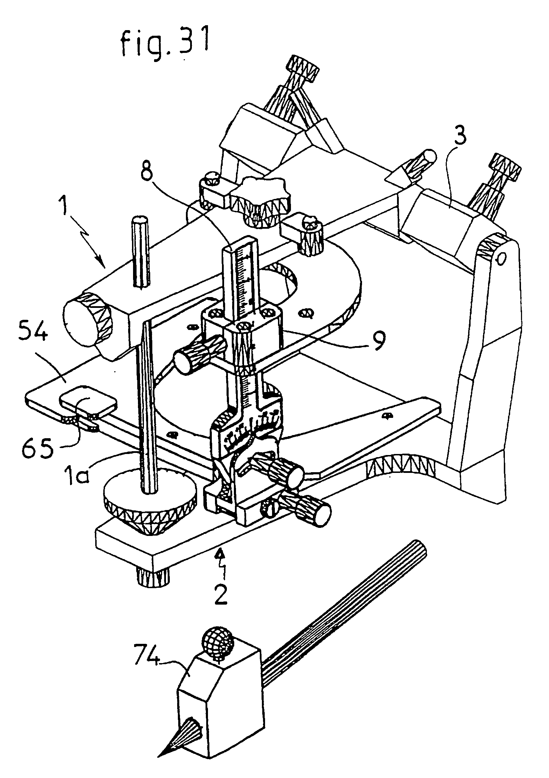

On a représenté en liaison avec les figures 26 à 31. une autre forme de réalisation de l'invention. Le principe de fonctionnement demeure bien entendu le même que celui précédemment décrit. La coulisse ou colonne verticale (8), de section autre que circulaire, de telle sorte à interdire tout pivotement selon la direction verticale, présente à sa base une portion élargie (60), destinée à coopérer avec un index de lecture (55), décrit ci-après plus en détail. Cette coulisse verticale (8) reçoit sur sa face externe, un insert rigide (75) portant des graduations en millimètres et en degrés, mieux représentée sur la figure 29. Cet insert, par exemple cartonné, comporte en fait une échelle millimétrique verticale, destinée à permettre la fixation du plateau (7) selon la hauteur souhaitée, et une échelle angulaire en degrés, destinée à permettre l'orientation dudit plateau selon également l'angulation souhaitée. Cet insert est reçu dans une gorge en T (non représentée), permettant ainsi sa fixation au niveau de la coulisse (8).

Ladite base (60) de la coulisse verticale (8) comporte en outre deux orifices alignés verticalement (61, 62) :
- l'un (61) borgne, et muni d'un filetage, destiné à recevoir une vis (63) de blocage de l'angulation souhaitée du plateau (7), ainsi que décrit ci-après ;
- l'autre (62) traversant, destiné à recevoir un axe d'articulation (64), permettant la modification de l'angulation dudit plateau par rapport à la base (60) de la coulisse (8).

Comme on peut le voir sur la figure 26, la base (60) coopère avec le plateau (7) par l'intermédiaire d'une pièce intermédiaire de liaison (56), orientée horizontalement et perpendiculairement par rapport à ladite coulisse verticale (8). Comme on peut le voir sur cette figure, ledit plateau (7) est amovible, et vient s'insérer dans ladite pièce (56) au niveau d'une gorge (76) et d'un ergot (65), destiné à coopérer avec une fente (66) ménagée au niveau de la base dudit plateau. En outre, cette gorge est également susceptible de recevoir une fourchette (54), dont la fonction sera décrite plus en détail ultérieurement. Le système d'assemblage des accessoires (plateau, fourchette) ainsi décrit au niveau de la pièce intermédiaire a été décrit à titre exemplatif, et non limitatif. Le plateau (7) et la fourchette (54) sont maintenus enclenchés dans la gorge (76) de la pièce intermédiaire par friction. Il peut être envisagé de mettre en oeuvre une vis (73) au niveau de l'ergot (65), favorisant cette immobilisation.

Cette pièce intermédiaire de liaison (56) présente au niveau de l'une de ses extrémités une zone de fixation (57) munie de deux branches (58, 59), destinées à venir se glisser de part et d'autre de l'extrémité inférieure de la base (60) de la coulisse verticale (8). Plus précisément, il vient s'insérer entre les branches (58, 59) outre ladite base (60), également l'index de lecture de graduation (55). Ainsi, l'axe (64) d'articulation mentionné précédemment est inséré dans un orifice traversant (67), puis dans un orifice traversant (69) ménagé à l'extrémité inférieure de l'index (55), puis dans un orifice muni d'un filetage (68), ménagé dans la branche (59) de l'extrémité (57) de la pièce (56).

Par ailleurs, l'index (55) est bloqué en position au sein de l'extrémité (57) de la pièce intermédiaire (56) au moyen d'une vis (70), traversant un orifice (71) ménagé dans la branche (58) et venant s'appuyer sur la face dudit index.

Comme on peut mieux le voir sur la figure 28, l'index (55) présente une fenêtre arquée (72), destinée à se situer en regard de la zone de graduation en degrés de la graduation (75), lorsque l'ensemble est en place.

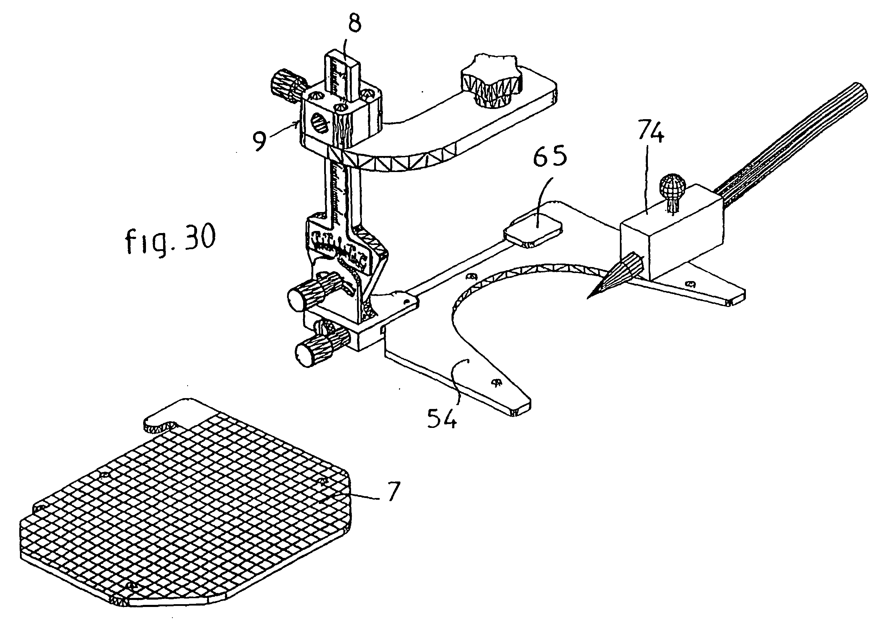

La fourchette (54) mentionnée précédemment est destinée à permettre le contrôle des niveaux respectifs des structures alvéolo-dentaires droite, antérieure et gauche, et de tracer, au moyen d'un organe de traçage (74) (voir figure 30), promené à plat à la surface supérieure de ladite fourchette, sur les modèles des arcades du patient une trace strictement angulée et ce à la précision millimétrique requise.

L'exemple d'application de l'articulateur selon l'invention, tel que décrit précédemment, ne constitue que l'une des possibilités d'emploi de cet articulateur. Il peut être notamment employé pour corriger une absence de molaires au fond des mâchoires, voire un écrasement de l'étage inférieur. en fabriquant des maquettes d'occlusion prenant la place des molaires manquantes. Une autre application possible consiste en une fabrication de modèles d'occlusion pour compenser l'absence de dents d'un seul côté. D'autres applications apparaîtront à l'évidence pour les hommes de l'art.

## Revendications

1. Articulateur permettant le paramètrage du plan d'orientation prothétique ou occlusal et des étages dento-alvéolaires, en vue de l'élaboration de prothèses dentaires comportant deux éléments plans supérieur et inférieur (1, 2) articulés entre eux autour d'un axe horizontal (3) parallèle aux plans des éléments (1, 2) et situé au-dessus de l'élément plan inférieur (2), les deux éléments plans (1, 2) étant destinés à la fixation, en regard l'un de l'autre et en contact l'un avec l'autre, de deux modèles (5, 6) des arcades dentaires d'un patient, à savoir un modèle supérieur (5) fixé sous la face inférieure de l'élément supérieur (1) et un modèle inférieur (6) fixé sur la face supérieure de l'élément inférieur (2), et des moyens pour définir, entre les deux éléments (1, 2), un plan incliné par rapport à l'élément supérieur (1) et correspondant à un plan d'occlusion P entre les deux modèles (5, 6), lesdits moyens définissant le plan incliné correspondant au plan d'occlusion P étant portés par l'élément supérieur (1) et comportant un plateau (7) matérialisant le plan d'orientation occlusal P, le réglage de la distance du plateau (7) par rapport à l'élément supérieur (1) étant assuré par au moins un ensemble porté par l'élément supérieur (1), ***caractérisé* :**
• **en ce que** les moyens pour définir le plan d'orientation occlusal P comportent des moyens de réglage (8, 9 ; 13 ; 56 - 59 ; 64 - 70) de l'angle d'inclinaison et de la distance du plateau (7) par rapport à l'élément supérieur (1) ;
• **en ce que** le réglage de la distance du plateau (7) par rapport à l'élément supérieur (1) est également assuré par une colonne munie d'une graduation (8) portant le plateau (7) à son extrémité inférieure et coulissant perpendiculairement à l'élément supérieur (1) dans l'ensemble (9), assurant le guidage de la colonne (8) et son blocage dans une position réglable par rapport à l'élément supérieur (1).

2. Articulateur selon la revendication 1, ***caractérisé*** en que l'élément supérieur (1) comporte deux ensembles de guidage et de blocage antérieur (9) et postérieur (9a), pour le réglage de la distance du plateau (7) par rapport à l'élément supérieur (1), l'ensemble de guidage et de blocage postérieur (9a) étant plus proche de l'axe d'articulation (3) des deux éléments (1, 2) que l'ensemble antérieur (9).

3. Articulateur selon l'une quelconque des revendications 1 et 2, ***caractérisé* en ce que** la colonne (8) porte, à sa partie inférieure, un ensemble (13) supportant le plateau (7) pivotant autour d'un axe (16) parallèle à l'axe d'articulation (3) entre les deux éléments (1, 2) de l'articulateur.

4. Articulateur selon la revendication 3, ***caractérisé* en ce que** l'ensemble (13) comporte
• une butée réglable (21) montée à rotation autour de l'axe de pivotement (16) du plateau (7) ;
• des moyens (26, 28, 29) de blocage de la butée réglable (21) dans la position angulaire, par rapport à l'élément supérieur (1), correspondant à l'inclinaison désirée du plan d'orientation prothétique ou occlusal,
• une pièce intermédiaire de liaison (22), solidaire du plateau (7), emboîtée sur la butée réglable (21), montée à rotation autour de l'axe de pivotement (16), et dont la course de pivotement vers le haut est arrêtée par la butée (21) ;
• et des moyens de blocage (34) de la pièce intermédiaire de liaison (22) sur la butée réglable (21).

5. Articulateur selon l'une quelconque des revendications 3 ou 4, ***caractérisé* en ce que** la colonne (8) présente à sa partie inférieure une chape (18), dont les deux branches parallèles sont percées de trous coaxiaux (19) supportant l'axe de pivotement (16) du plateau (7).

6. Articulateur selon l'une quelconque des revendications 3 ou 4, ***caractérisé* en ce que** la colonne (8) présente sur sa face extérieure une gorge en T, destinée à recevoir un insert rigide (75) portant les graduations en millimètres et en degrés.

7. Articulateur selon l'une quelconque des revendications 4 et 5, ***caractérisé* :**
• **en ce que** la butée réglable (21) est appliquée contre une face latérale verticale de la partie inférieure de la colonne (8),
• **en ce que** ladite butée (21) comporte un orifice traversant (23) de même diamètre que celui de l'axe de pivotement (16) et destiné à recevoir cet axe,
• **en ce que** la butée (21) comporte dans sa face externe un trou borgne (24), disposé entre l'orifice traversant (23) et un côté vertical (25) de la butée réglable (21),
• **en ce que** la butée (21) présente de l'autre côté de l'orifice traversant (23) une fente oblongue (26) en forme d'arc de cercle centré sur le centre de l'orifice traversant (23), et dont l'un des bords porte une graduation (27), cette fente oblongue (26) s'étendant en regard d'un trou borgne fileté (28) réalisé dans la face latérale verticale de la colonne (8) contre laquelle est plaquée la butée réglable (21), et destiné à coopérer avec une vis de blocage (29) insérée à travers la fente oblongue (26), permettant de la sorte de bloquer la butée réglable (21) dans n'importe quelle position angulaire désirée par rapport à l'élément supérieur (1).

8. Articulateur selon l'une quelconque des revendications 4, 5 et 7, ***caractérisé* en ce que** la pièce intermédiaire de liaison (22) est accouplée au plateau (7) par l'intermédiaire d'une chape (31) de forme appropriée, fixée par son âme transversale au côté transversal arrière (7a) dudit plateau (7), et dont les ailes parallèles s'étendent vers l'arrière en direction de l'axe de pivotement (16).

9. Articulateur selon la revendication 8, ***caractérisé* en ce qu'**il comporte une vis (34) traversant un trou percé dans une aile de la chape (31), et un trou fileté (35) réalisé au sein de la pièce intermédiaire de liaison (22), pour venir s'engager par son extrémité, dans le trou borgne (24) formé dans la butée réglable (21), afin de bloquer le plateau (7) dans la position inclinée désirée sur la butée réglable (21).

10. Articulateur selon l'une quelconque des revendications 8 et 9, ***caractérisé* en ce qu'**il comporte un plateau partiel constitué d'une glissière (41) solidaire, sur sa face arrière, de la chape (31) accouplée à la pièce intermédiaire de liaison (22) de l'ensemble (13), et portant sur sa face avant, l'une parmi plusieurs réglettes interchangeables (42-45).

11. Articulateur selon la revendication 10, ***caractérisé* en ce que** chaque réglette (42-45) comporte une partie horizontale plane, de faible largeur, en forme de L, de trapèze ou de triangle rectangle, et un moyen d'assemblage avec la glissière (41).

12. Articulateur selon l'une quelconque des revendications 10 ou 11, ***caractérisé* en ce qu'**il comporte un compas (46), dont l'une des branches (47) est articulée autour d'un axe (48) perpendiculaire au plan des réglettes (42-45), à l'une ou l'autre des extrémités de la glissière (41), et dont l'autre branche (49) est articulée sur la première branche (47) autour d'un axe (51), et porte à son extrémité libre un élément de traçage (52) s'étendant parallèlement au plan des réglettes (42-45).

13. Articulateur selon l'une des revendications 1, 2 et 6, ***caractérisé* en ce que** la colonne (8) présente à sa partie inférieure, une base (60), destinée à coopérer avec une pièce intermédiaire de liaison (56) portant de manière amovible le plateau (7), propre à permettre de conférer audit plateau l'inclinaison souhaitée.

14. Articulateur selon la revendication 13, ***caractérisé* en ce que** la pièce intermédiaire de liaison (56) présente au niveau de l'une de ses extrémités une zone de fixation (57) munie de deux branches (58, 59), destinées à venir se glisser de part et d'autre de l'extrémité inférieure de la base (60) de la colonne (8).

15. Articulateur selon la revendication 14, ***caractérisé* en ce qu'**un index de lecture de graduation (55) est inséré entre les branches (58, 59) de la zone de fixation (57), outre la base (60) de la colonne (8).

16. Articulateur selon l'une des revendications 13 à 15, ***caractérisé* en ce qu'**il comporte en outre une fourchette (54), susceptible de venir se positionner au niveau de la pièce intermédiaire de liaison (56), et destinée à permettre le contrôle des niveaux respectifs des structures alvéolo-dentaires droite, antérieure et gauche, et de tracer, au moyen d'un organe de traçage (74) qui lui est associé, promené à plat à la surface supérieure de ladite fourchette, sur les modèles des arcades du patient, une trace strictement angulée.

## Claims

1. An articulator making it possible to parametrize the prosthetic or occlusal orientation plane and the dentoalveolar stages for the purpose of producing dental prostheses comprising two upper and lower planar elements (1, 2) articulated relative to one another about a horizontal axis (3) parallel to the planes of the elements (1, 2) and located above the lower planar element (2), the two planar elements (1, 2) being intended for fastening two models (5, 6) of a patient's dental arches opposite one another and in contact with one another, specifically an upper model (5) fastened under the lower face of the upper element (1) and a lower model (6) fastened on the upper face of the lower element (2), and means for defining, between the two elements (1, 2), a plane inclined relative to the upper element (1) and corresponding to an occlusal plane P between the two models (5, 6), said means which define the inclined plane corresponding to the occlusal plane P being carried by the upper element (1) and comprising a plate (7) embodying the occlusal orientation plane P, the adjustment of the distance of the plate (7) in relation to the upper element (1)) being ensured by means of at least one assembly (9) carried by the upper element (1), **characterized:**
• **in that** the means for defining the occlusal orientation plane P comprise means (8, 9; 13; 56-59; 64-70) for adjusting the angle of inclination and the distance of the plate (7) in relation to the upper element (1);
• **in that** the adjustment of the distance of the plate (7) in relation to the upper element (1) is also ensured by means of a column provided with a graduation (8) and carrying at its lower end the plate (7) and sliding perpendicularly to the upper element (1) in the assembly (9), thus ensuring the guidance of the column (8) and the locking of the latter in a position adjustable relative to the upper element (1).

2. The articulator as claimed in claim 1, **characterized in that** the upper element (1) comprises for ensuring the adjustment of the distance of the plate (7) in relation to the upper element (1) two anterior (9) and posterior (9a) guiding and locking assemblies, the posterior guiding and locking assembly (9a) being nearer to the axis of articulation (3) of the two elements (1, 2) than the anterior assembly (9).

3. The articulator as claimed in either one of claims 1 and 2, **characterized in that** the column (8) carries, in its lower part, an assembly (13) which carries the plate (7) pivoting about an axis (16) parallel to the axis of articulation (3) between the two elements (1, 2) of the articulator.

4. The articulator as claimed in claim 3, **characterized in that** the assembly (13) comprises:
• an adjustable stop (21) mounted rotatably about the pivot axis (16) of the plate (7);
• means (26, 28, 29) for locking the adjustable stop (21) in the angular position relative to the upper element (1), corresponding to the desired inclination of the prosthetic or occlusal orientation plane,
• an intermediate connection piece (22) which is integral with the plate (7), is fitted on the adjustable stop (21) and is mounted rotatably about the pivot axis (16) and the upward pivoting stroke of which is detained by the stop (21);
• and means (34) for locking the intermediate connection piece (22) on the adjustable stop (21).

5. The articulator as claimed in either one of claims 3 or 4, **characterized in that** the column (8) has, in its lower part, a fork (18), the two parallel branches of which are pierced with coaxial holes (19) supporting the pivot axis (16) of the plate (7).

6. The articulator as claimed in either one of claims 3 or 4, **characterized in that** the column (8) has, on its outer face, a T-shaped groove intended for receiving a rigid insert (75) carrying the graduations in millimeters and in degrees.

7. The articulator as claimed in either one of claims 4 and 5, **characterized:**
• **in that** the adjustable stop (21) is laid against a vertical lateral face of the lower part of the column (8),
• **in that** said stop (21) comprises a through orifice (23) of the same diameter as that of the pivot axis (16) and intended for receiving this axis,
• **in that** the stop (21) comprises, in its outer face, a blind hole (24) arranged between the through orifice (23) and a vertical side (25) of the adjustable stop (21),
• **in that** the stop (21) has, on the other side of the through orifice (23), an oblong slot (26) which is in the form of an arc of a circle centered on the center of the through orifice (23) and one of the edges of which carries a graduation (27), this oblong slot (26) extending opposite a threaded blind hole (28) which is made in the vertical lateral face of the column (8), against which the adjustable stop (21) is laid, and is intended for cooperating with a locking screw (29) inserted through the oblong slot (26), thus making it possible to lock the adjustable stop (21) in any desired angular position in relation to the upper element (1).

8. The articulator as claimed in any one of claims 4, 5 and 7, **characterized in that** the intermediate connection piece (22) is coupled to the plate (7) by means of a fork (31) of suitable shape, which is fastened with its transverse web to the rear transverse side (7a) of said plate (7) and the parallel wings of which extend rearward in the direction of the pivot axis (16).

9. The articulator as claimed in claim 8, **characterized in that** it comprises a screw (34) passing through a hole pierced in a wing of the fork (31), and a threaded hole (35) made within the intermediate connection piece (22), so as to engage with its end into the blind hole (24) formed in the adjustable stop (21), in order to lock the plate (7) in the desired inclined position on the adjustable stop (21).

10. The articulator as claimed in either one of claims 8 and 9, **characterized in that** it comprises a partial plate consisting of a slideway (41) which is integral on its rear face with the fork (31) coupled to the intermediate connection piece (22) of the assembly (13) and which carries on its front face one of a plurality of interchangeable rules (42-45).

11. The articulator as claimed in claim 10, **characterized in that** each rule (42-45) comprises a planar horizontal part of small width, L-shaped, trapezoidal or in the form of a right-angled triangle, and a means of assembly with the slideway (41).

12. The articulator as claimed in either one of claims 10 or 11, **characterized in that** it comprises a compass (46), one (47) of the branches of which is articulated about an axis (48) perpendicular to the plane of the rules (42-45) at one or other of the ends of the slideway (41), and the other branch (49) of which is articulated on the first branch (47) about an axis (51) and at its free end carries a tracing element (52) extending parallel to the plane of the rules (42-45).

13. The articulator as claimed in one of claims 1, 2 and 6, **characterized in that** the column (8) has, in its lower part, a base (60) intended for cooperating with an intermediate connection piece (56) carrying the plate (7) removably and capable of making it possible to give said plate the desired inclination.

14. The articulator as claimed in claim 13, **characterized in that** the intermediate connection piece (56) has, in the region of one of its ends, a fastening zone (57) provided with two branches (58, 59) intended to be slipped on either side of the lower end of the base (60) of the column (8).

15. The articulator as claimed in claim 14, **characterized in that**, in addition to the base (60) of the column (8), a graduation reading index (55) is inserted between the branches (58, 59) of the fastening zone (57).

16. The articulator as claimed in one of claims 13 to 15, **characterized in that** it comprises, furthermore, a yoke (54) capable of coming into position in the region of the intermediate connection piece (56) and intended to make it possible to check the respective levels of the right, anterior and left alveolodental structures and, by means of a tracing member (74) associated with it and led flat on the upper surface of said yoke, to trace a strictly angulated trace on the models of the patient's arches.

## Patentansprüche

1. Artikulator zum Parametrieren der Prothesen-Orientierungsoder Okklusionsebene und der Zahnfachetagen in Hinblick auf die Erstellung von Zahnprothesen, mit zwei ebenen Elementen, einem oberen und einem unteren (1, 2), die um eine zu den Ebenen der Elemente (1, 2) parallele horizontale Achse (3), die oberhalb des unteren ebenen Elements (2) gelegen ist, gelenkig miteinander verbunden sind, wobei die beiden ebenen Elemente (1, 2) der Befestigung zweier Modelle (5, 6) von Zahnbögen eines Patienten in einander gegenüberliegender und einander berührender Anordnung dienen, nämlich eines oberen Modells (5), das unter der Unterseite des oberen Elements (1) befestigt wird, und eines unteren Modells (6), das auf der Oberseite des unteren Elements (2) befestigt wird, und mit Mitteln zum Definieren einer Ebene zwischen den beiden Elementen (1, 2), die bezüglich dem oberen Element (1) geneigt ist und einer Okklusionsebene P zwischen den beiden Modellen (5, 6) entspricht, wobei die die geneigte, der Okklusionsebene P entsprechende Ebene definierenden Mittel von dem oberen Element (1) getragen sind und eine Platte (7) aufweisen, die die Okklusionsorientierungsebene P verkörpert, wobei die Einstellung des Abstandes der Platte (7) bezüglich dem oberen Element (1) durch zumindest eine von dem oberen Element (1) getragene Anordnung gewährleistet ist, **dadurch gekennzeichnet, daß**
• die Mittel zum Definieren der Okklusionsorientierungsebene P Einstellmittel (8, 9; 13; 56-59; 64-70) für den Neigungswinkel und den Abstand der Platte (7) bezüglich dem oberen Element (1) aufweisen;
• die Einstellung des Abstandes der Platte (7) bezüglich dem oberen Element (1) ebenso durch eine mit einer Maßeinteilung versehene Säule (8) gewährleistet ist, die an ihrem unteren Ende die Platte (7) trägt und senkrecht zu dem oberen Element (1) in der Anordnung (9) verschiebbar ist, die die Führung der Säule (8) und ihre Arretierung in einer bezüglich dem oberen Element (1) einstellbaren Position gewährleistet.

2. Artikulator nach Anspruch 1, **dadurch gekennzeichnet, daß** das obere Element (1) zwei Führungs- und Arretierungsanordnungen für die Einstellung des Abstandes der Platte (7) bezüglich dem oberen Element (1) aufweist, und zwar eine vordere (9) und eine hintere (9a), wobei die hintere Führungs- und Arretierungsanordnung (9a) näher an der Gelenkachse (3) der beiden Elemente (1, 2) gelegen ist als die vordere Anordnung (9).

3. Artikulator nach Anspruch 1 oder 2, **dadurch gekennzeichnet, daß** die Säule (8) in ihrem unteren Bereich eine Anordnung (13) trägt, die die Platte (7) hält, die um eine zur Gelenkachse (3) zwischen den beiden Elementen (1, 2) des Artikulators parallele Achse (16) verschwenkbar ist.

4. Artikulator nach Anspruch 3, **dadurch gekennzeichnet, daß** die Anordnung (13) aufweist:
• einen um die Schwenkachse (16) der Platte (7) drehbar montierten einstellbaren Anschlag (21);
• Arretiermittel (26, 28, 29) zum Arretieren des einstellbaren Anschlags (21) in der Winkelstellung bezüglich dem oberen Element (1), die der gewünschten Neigung der Prothesen-Orientierungs- oder Okklusionsebene entspricht;
• ein mit der Platte (7) fest verbundenes Verbindungszwischenstück (22), das auf dem einstellbaren Anschlag (21) sitzt und um die Schwenkachse (16) drehbar montiert ist, und dessen Schwenkweg nach oben durch den Anschlag (21) begrenzt ist;
• und Arretiermittel (34) zum Arretieren des Verbindungszwischenstücks (22) an dem einstellbaren Anschlag (21).

5. Artikulator nach Anspruch 3 oder 4, **dadurch gekennzeichnet, daß** die Säule (8) in ihrem unteren Bereich eine Gabel (18) aufweist, dessen beiden parallelen Schenkel von koaxialen Bohrungen (19) durchsetzt sind, die die Schwenkachse (16) der Platte (7) halten.

6. Artikulator nach Anspruch 3 oder 4, **dadurch gekennzeichnet, daß** die Säule (8) auf ihrer Außenseite eine T-förmige Nut aufweist, die der Aufnahme eines starren Einsatzes (75) dient, der die Maßeinteilungen in Millimetern und Graden trägt.

7. Artikulator nach Anspruch 4 oder 5, **dadurch gekennzeichnet, daß**
• der einstellbare Anschlag (21) gegen eine vertikale Seitenfläche des unteren Bereichs der Säule (8) anliegt;
• daß der Anschlag (21) eine durchgehende Öffnung (23) von gleichem Durchmesser wie die Schwenkachse (16) aufweist, die der Aufnahme dieser Achse dient;
• daß der Anschlag (21) in seiner Außenseite eine Sacklochbohrung (24) aufweist, die zwischen der durchgehenden Öffnung (23) und einer vertikalen Seite (25) des einstellbaren Anschlags (21) angeordnet ist;
• daß der Anschlag (21) auf der anderen Seite der durchgehenden Öffnung (23) ein Langloch (26) in Form eines Kreisbogens aufweist, der um den Mittelpunkt der durchgehenden Öffnung (23) zentriert ist, und dessen einer Rand eine Maßeinteilung (27) trägt, wobei sich das Langloch (26) einer mit einem Gewinde versehenen Sacklochbohrung (28) gegenüberliegend erstreckt, die in der vertikalen Seitenfläche der Säule (8) vorhanden ist, gegen die der einstellbare Anschlag (21) anliegt, und die dazu dient, mit einer Arretierschraube (29) zusammenzuwirken, die quer in das Langloch (26) eingesetzt ist, um so die Arretierung des einstellbaren Anschlags (21) in einer beliebigen gewünschten Winkelstellung bezüglich dem oberen Element (1) zu ermöglichen.

8. Artikulator nach einem der Ansprüche 4, 5 oder 7, **dadurch gekennzeichnet, daß** das Verbindungszwischenstück (22) mit der Platte (7) mittels einer Gabel (31) von geeigneter Form gekoppelt ist, die über ihren Quersteg an der hinteren Querseite (7a) der Platte (7) befestigt ist, und deren parallelen Flansche sich in Richtung der Schwenkachse (16) nach hinten erstrecken.

9. Artikulator nach Anspruch 8, **dadurch gekennzeichnet, daß** er eine Schraube (34) aufweist, die durch eine in einem Flansch der Gabel (31) vorhandene Bohrung und durch eine in dem Verbindungsstück (22) geschaffene mit Gewinde versehene Bohrung (35) hindurchgeht, um mit ihrem Ende in die in dem einstellbaren Anschlag (21) gebildete Sacklochbohrung (24) einzugreifen, um die Platte (7) in der gewünschten geneigten Position auf dem einstellbaren Anschlag (21) zu arretieren.

10. Artikulator nach Anspruch 8 oder 9, **dadurch gekennzeichnet, daß** er eine Teilplatte aufweist, die durch eine Gleitschiene (41) gebildet ist, die auf ihrer Rückseite mit der Gabel (31) fest verbunden ist, die mit dem Verbindungszwischenstück (22) der Anordnung (13) gekoppelt ist, und auf ihrer Vorderseite eine von mehreren austauschbaren Justierleisten (42-45) trägt.

11. Artikulator nach Anspruch 10, **dadurch gekennzeichnet, daß** jede Justierleiste (42-45) einen ebenen horizontalen Bereich von geringer Breite in Form eines L, eines Trapezes oder eines rechtwinkligen Dreiecks und ein Mittel zur Montage an der Gleitschiene (41) aufweist.

12. Artikulator nach Anspruch 10 oder 11, **dadurch gekennzeichnet, daß** er einen Zirkel (46) aufweist, dessen einer Schenkel (47) um eine zur Ebene der Justierleisten (42-45) senkrechte Achse (48) mit dem einen oder anderen Ende der Gleitschiene (41) gelenkig verbunden ist, und dessen anderer Schenkel (49) mit dem ersten Schenkel (47) um eine Achse (51) gelenkig verbunden ist und an seinem freien Ende ein Anzeichnungselement (52) trägt, das sich parallel zur Ebene der Justierleisten (42-45) erstreckt.

13. Artikulator nach einem der Ansprüche 1, 2 oder 6, **dadurch gekennzeichnet, daß** die Säule (8) in ihrem unteren Bereich eine Basis (60) aufweist, die dazu dient, mit einem Verbindungszwischenstück (56) zusammenzuwirken, das in abnehmbarer Weise die Platte (7) trägt, und das geeignet ist, es zu ermöglichen, der Platte die gewünschte Neigung zu geben.

14. Artikulator nach Anspruch 13, **dadurch gekennzeichnet, daß** das Verbindungszwischenstück (56) im Bereich eines seiner Enden eine Befestigungszone (57) aufweist, die mit zwei Schenkeln (58, 59) versehen ist, die dazu dienen, sich beidseits des unteren Endes der Basis (60) der Säule (8) zu verschieben.

15. Artikulator nach Anspruch 14, **dadurch gekennzeichnet, daß** ein Zeiger (55) zum Ablesen der Maßeinteilung zwischen den Schenkeln (58, 59) der Befestigungszone (57) und der Basis (60) der Säule (8) eingesetzt ist.

16. Artikulator nach einem der Ansprüche 13 bis 15, **dadurch gekennzeichnet, daß** er außerdem einen Bügel (54) aufweist, der in der Lage ist, im Bereich des Verbindungszwischenstücks (56) positioniert zu werden, und der dazu dient, die Kontrolle des jeweiligen Niveaus der rechten, vorderen und linken Zahnfachstruktur zu ermöglichen, und mittels eines Anzeichnungsorgans (74), das diesem zugeordnet ist, und das plan auf der oberen Oberfläche des Bügels geführt ist, auf den Modellen der Bögen des Patienten eine streng gewinkelte Spur anzuzeichnen.
